# EUROPÄISCHE PATENTANMELDUNG

(11) **EP 0 567 842 A1**
(43) Veröffentlichungstag der Anmeldung: **03.11.1993**
(21) Anmeldenummer: 93106016.4
(22) Anmeldetag: 14.04.1993
(51) Int. Cl.: C08F 220/00, C08F 222/00, C14C 9/00, C14C 3/22

(54) **Copolymerisate**

(30) Priorität: 29.04.1992 DE 4214011
(71) Anmelder: Münzing Chemie GmbH, D-74076 Heilbronn (DE)
(72) Erfinder: Eberhardt, Wolfgang, W-7101 Untergruppenbach (DE); Schmitz, Heribert, Dr., W-7100 Heilbronn (DE)
(74) Vertreter: Hoeger, Stellrecht & Partner

(57) **Zusammenfassung**

Es werden als Behandlungsmittel für die Nachgerbung, Füllung, Weichmachung und Hydrophobierung von Leder und Pelzfellen optimierbare Copolymerisate vorgeschlagen, welche erhältlich sind durch Copolymerisation einer ersten Komponente (a), ausgewählt aus der Reihe der ethylenisch ungesättigten Dicarbonsäureanhydride, ethylenisch ungesättigter Dicarbonsäureester und ethylenisch ungesättigter Dicarbonsäureamiden oder Gemischen hiervon,
sowie einer Komponente (b) der allgemeinen Formel 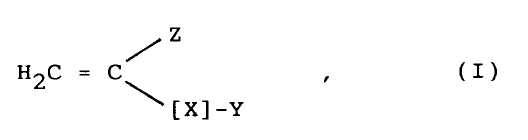
wobei X = (CH₂)ₙ' n ≧ 2 ist und Y eine Carboxylgruppe oder einen OCOR¹-Rest, einen COOR²-Rest oder einen CONR³R⁴-Rest repräsentiert und Z Wasserstoff oder ein niederer Alkylrest ist,
wobei R¹ ein C₁-C₂₀-Alkyl-Rest ist,
wobei R² ein C₁-C₂₀-Alkyl-Rest oder ein Alkoxylierungsprodukt hiervon ist,
wobei R³ und R⁴ Wasserstoff oder einen Alkylrest (C₁-C₂₀) repräsentieren und gegebenenfalls verschieden sind.

## Beschreibung

Die Erfindung betrifft Copolymerisate, insbesondere für die Behandlung von Leder und Pelzfellen, erhalten durch Copolymerisation einer ersten Komponente (a), ausgewählt aus der Reihe ethylenisch ungesättigter Dicarbonsäureverbindungen mit einer weiteren, ungesättigten Komponente (b).

Aus der EP 0 418 661 A1 ist ein Copolymerisat aus einer ungesättigten Dicarbonsäureverbindung sowie C₈-C₄₀-Alkylacrylaten, -Methacrylaten oder -Carbonsäurevinylestern bekannt.

Ferner sind solche Copolymerisate beispielsweise aus der DE 39 26 167 A 1 und der DE 39 26 168 A 1 bekannt. Bei diesen Copolymerisaten wird als weitere ungesättigte Komponente neben der ethylenisch ungesättigten Dicarbonsäureverbindung ein C₈-C₄₀-Monoolefin bzw. ein C₈-C₄₀ Alkyl-Vinylether, gegebenenfalls in Mischung mit C₈-C₄₀-Monoolefinen, verwendet.

Nachteilig bei den bekannten Copolymerisaten ist, daß diese im Wege einer Charge-Transfer-Polymerisation mit einem Molverhältnis von 1:1 der beiden ungesättigten Komponenten erhalten werden, mit einer nachfolgenden Solvolyse, die die Copolymerisate, insbesondere zur Lederhydrophobierung, geeignet machen soll. Bei diesen Verbindungen ist jedoch eine gezielte Anpassung der Eigenschaften, wie Löslichkeit, Dispergiervermögen, Nachgerbungseffekt, Weichmachungseffekt und Hydrophobierungseffekt, wenn überhaupt, dann nur sehr begrenzt möglich.

Beispielsweise werden durch die Solvolyse der Anhydridgruppen gemäß der DE 39 26 168 A 1 mit Alkoholen und/oder Aminen zwar die weichmachenden und hydrophobierenden Eigenschaften der Copolymerisate verbessert, gleichzeitig werden jedoch die Eigenschaften wie Löslichkeit und Dispergiervermögen verschlechtert.

Die vorliegende Erfindung stellt sich deshalb die Aufgabe, ausgehend von den eingangs erwähnten Copolymerisaten, weitere Copolymerisate vorzuschlagen, die als Behandlungsmittel für die Nachgerbung, Füllung, Weichmachung und Hydrophobierung von Leder und Pelzfellen vielfältig optimierbar sind.

Diese Aufgabe wird bei Copolymerisaten der eingangs beschriebenen Art erfindungsgemäß dadurch gelöst, daß die Copolymerisate durch eine Copolymerisation einer ersten Komponente (a), ausgewählt aus der Reihe der ethylenischen ungesättigten Dicarbonsäureanhydride, ethylenisch ungesättigter Dicarbonsäureester und ethylenisch ungesättigter Dicarbonsäureamide oder Mischungen hiervon, sowie einer Komponente (b) der allgemeinen Formel hergestellt werden, 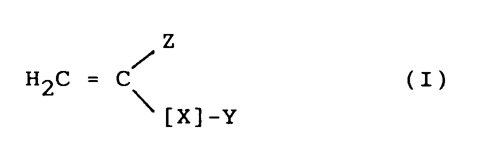
wobei X = (CH₂)ₙ, n ≧ 2; und Y eine Carboxylgruppe oder einen OCOR¹-Rest, einen COOR²-Rest oder einen CONR³R⁴-Rest repräsentieren, wobei R¹ ein C₁-C₂₀-Alkylrest ist, wobei R² ein C₁-C₂₀-Alkylrest oder ein Alkoxylierungsprodukt hiervon ist, und wobei R³, R⁴ Wasserstoff oder einen Alkylrest (C₁-C₂₀) repräsentieren und gegebenenfalls verschieden sind. Z ist üblicherweise H, kann aber auch ein niederer Alkylrest, insbesondere ein Methylrest, sein.

Vorzugsweise werden die Copolymerisate ein mittleres Molekulargewicht von ca. 800 bis ca. 30 000 g/Mol aufweisen.

Bei der der Copolymerisation nachfolgenden Behandlung der Copolymerisate werden vorzugsweise im Copolymerisat vorhandene Carbonsäureanhydridgruppen in wässriger Umgebung hydrolysiert, wobei die entstandenen Carboxylgruppen, zumindest teilweise, mit Basen, vorzugsweise Alkalihydroxiden, neutralisiert werden.

Weiter bevorzugt und gegebenenfalls alternativ hierzu werden im Copolymerisat vorhandene Carbonsäureanhydridgruppen mit einem Anteil von bis zu 90 % mit Alkoholen oder primären oder sekundären Aminen oder Gemischen hiervon umgesetzt.

Für die Produkteigenschaften als allgemein günstig hat sich herausgestellt, wenn die Copolymerisate bei einer Temperatur von ca. 60° C bis ca. 250° C polymerisiert werden.

Die Komponente (b), die allgemein als ω-ethylenisch ungesättigte Verbindung beschrieben werden kann, ist bevorzugt ein Undecensäurederivat oder ein Undecenolderivat sowie gegebenenfalls ein Alkylvinylether mit 8 bis 20 C-Atomen, ein Carbonsäurevinylester mit ca. 8 bis 20 C-Atomen oder ein 1-Alken mit 8 bis 30 C-Atomen. Die sogenannten Verbindungen können einzeln oder aber auch im Gemisch Verwendung finden.

Die zuvor beschriebenen erfindungsgemäßen Copolymerisate eignen sich insbesondere zur Behandlung von Leder und Pelzfellen, insbesondere zu deren Hydrophobierung, sowie zur Erzielung von Fettungs-, Füll- oder Nachgerbeffekten.

Die Monomeren der Komponente (a) werden mit den Monomeren der Komponente (b) copolymerisiert und bilden dabei alternierende Polymere, wenn sie im Mol-Verhältnis von ca. 1:1 bis ca. 1:1,1 eingesetzt und insbesondere in Substanz bei 140 bis 220° C polymerisiert werden. Monomere der Komponente (a) sind ethylenisch ungesättigte Dicarbonsäureverbindungen, insbesondere Anhydride mit 4 bis 8 C-Atomen, vorzugsweise Maleinsäureanhydrid.

Alternativ oder in Kombination hierzu können Monomere als Komponente (a) eingesetzt werden, die Halbester oder Diester der zuvor beschriebenen Dicarbonsäureverbindungen einschließlich der Fumarsäure darstellen. Die Alkohole solcher Ester sind geradkettig oder verzweigt mit 1 bis 30 C-Atomen. Als Alkohole kommen weiter in Betracht C₁-C₄-Alkylenoxid-Addukte der genannten Alkohole.

Ferner sei als Monomeres der Komponente (a) Monobutylmaleinat, Monooctadecylmaleinat, Monooctadecyl-3 EO-maleinat, Dimethylmaleinat, Di-2-Ethylhexylmaleinat, Di-2-Ethylhexylfumarat, Diisotridecylmaleinat, Dioctadecenylfumarat genannt.

Weiter sind zu den Monomeren der Komponente (a) Amide und Halbamide der monomeren Dicarbonsäureverbindungen zu zählen, wiederum einschließlich der Fumarsäure. Diese Verbindungen basieren auf primären und/oder sekundären Aminen mit 1 bis 20 C-Atomen einschließlich Ammoniak. Beispielsweise seien genannt Maleinsäurecyclohexylamid, Maleinsäureoctadecenylamid, Maleinsäuredibutylamid und Maleinsäurediisotridecylamid.

Im folgenden seien Beispiele für die Monomere der Komponente (b) genannt. Es gehören hierzu insbesondere die Ester von - ungesättigten Carbonsäuren. Die zugrunde liegenden Alkohole dieser Ester sind geradkettig oder verzweigt und weisen 1 bis 30 C-Atome auf. Ebenso hierzu zu zählen sind Addukte dieser Alkohole mit C₁-C₄-Alkylenoxiden. Beispielhaft seien genannt 10-Undecensäuremethylester, 15-Hexadecensäureethylester, 10-Undecensäurepropylester, 10-Undecensäurebutylester, 10-Undecensäuremethylbutylester, 10-Undecensäureheptylester, 17-Octadecensäureoctadecylester, 17-Octadecensäureoctadecenyl-(3 EO)-ester.

Monomere der Komponente (b) umfassen weiterhin Amide von ω - ungesättigten Carbonsäuren, denen Ammoniak, primäre oder sekundäre Amine mit 1 bis 20 C-Atomen als Grundstruktur zugrunde liegen. Beispielhaft seien genannt 10-Undecensäureamid, 15-Hexadecensäure-N,N-dibutylamid, 17-Octadecensäure-C₁₆_{/}₁₈-Talgfettamid. Ferner gehören zur Gruppe der Monomeren der Komponente (b) C₂-C₂₀-Carbonsäureester von ω -ungesättigten Alkoholen beispielsweise Undecenylstearat.

Die zuvor genannten Verbindungen, die sämtlich Beispiele der Monomeren gemäß Formel (I) betreffen, lassen sich in einer großen Vielzahl nach einem Verfahren herstellen, wie es beispielsweise in J. Org. Chem. 54, 1948 (1989) oder in der US-Patentschrift 4,845,271 beschrieben ist.

Bevorzugte Monomere der Komponente (b) sind 10-Undecensäure bzw. deren Derivate aufgrund der großtechnischen Verfügbarkeit.

Die Monomeren der Komponente (b) können gegebenenfalls gemeinsam mit Alkylvinylethern mit 8 - 20 C-Atomen, Vinylester von Carbonsäuren mit 8 - 20 C-Atomen sowie α-Alkenen mit 8 - 30 C-Atomen zum Einsatz gelangen. Als Beispiel seien genannt Octadecylvinylether, Vinylstearat, 1-Hexadecen sowie 1-Octadecen.

Die Monomeren der einzelnen Gruppen können für sich oder als Mischung innerhalb der Monomergruppe eingesetzt werden.

Die Anhydridgruppen der Copolymerisate können bei Bedarf partiell oder ganz solvolysiert werden. Dazu eignen sich Alkohole, bevorzugt primäre, mit 1 bis 30 C-Atomen. Die Alkohole können geradkettig oder verzweigt, gesättigt oder ungesättigt sein. Bevorzugt eignen sich Methanol, Propanol, Butanol, 2-Ethylhexanol, Isotridecylalkohol und andere Oxoalkohole, Fettalkohole und Guerbetalkohole, wie sie unter den Handelsnamen LOROL, NAFOL und ISOFOL erhältlich sind, sowie deren Alkoxylierungsprodukte mit C₂- bis C₄-Alkylenoxiden. Ansonsten dient Wasser zur Hydrolyse des Anhydridringes.

Zur Polymerisation werden vorteilhaft die Monomeren der Komponente (b) vorgelegt und die Monomeren der Komponente (a) im Verlauf der Polymerisation zudosiert. Die Polymerisation wird in üblichen Reaktoren, eventuell druckdicht, mit Rührer, Zulaufgefäßen bzw. Dosiervorrichtungen durchgeführt.

Die Polymerisation wird bei Temperaturen von 60 - 250° C, bevorzugt bei 140 - 220° C, in Gegenwart von Radikalinitiatoren durchgeführt. Derartige Verbindungen sind bevorzugt aus der Gruppe der organischen Peroxide auszuwählen. Beispielsweise eignen sich t-Butylpermaleinat, t-Butylperoxyisopropylcarbonat, t-Butylperbenzoat, Dicumylperoxid, Di-t-amylperoxid, Cumolhydroperoxid, t-Butylhydroperoxid und insbesondere Di-t-Butylperoxid. Die Initiatoren werden in einer Menge von 0,1 bis 5 Gew. %, bezogen auf die eingesetzten Monomeren, verwendet.

Die Molmassen der erfindungsgemäßen Copolymerisate liegen zwischen 800 und 30 000 g/Mol, vorzugsweise zwischen 5 000 und 20 000 g/Mol, wobei die Bestimmung der Molmassen vor der Neutralisation mit Hilfe der GPC (Eluent: THF; Standard: engverteilte Fraktionen von PMMA) geschieht. Die Molmassen lassen sich durch entsprechende Wahl der Polymerisationstemperatur einstellen. In Einzelfällen kann die Mitverwendung üblicher Polyinerisationsregler sinnvoll sein. Üblicherweise verwendet man kurzkettige Aldehyde, insbesondere schwefelhaltige Verbindungen wie Mercaptoessigsäure, Mercaptopropionsäure, n-Dodecylmercaptan, t-Dodecylmercaptan, Mercaptoethanol und Ester der Thioglycolsäure.

Die Regler werden in einer Menge von 0,1 bis 3 Gew. % eingesetzt.

Zur Durchführung der Polymerisation werden die vorgelegten Monomeren, vorzugsweise die Monomere der Komponente (b), unter Stickstoff auf Reaktionstemperatur aufgeheizt. Die Comonomeren werden im Verlauf von 2 bis 6 Stunden zudosiert, bevorzugt im flüssigen Zustand. Der Radikalinitiator kann in den zu dosierenden Monomeren enthalten sein oder wird separat während des Monomerzulaufs zudosiert; genauso wird mit dem Regler verfahren.

Die erfindungsgemäßen Copolymerisate eignen sich hervorragend als Behandlungsmittel für Leder, insbesondere für die Nachgerbung, Füllung, Weichmachung und Hydrophobierung; sie zeichnen sich aus durch gute Löslichkeit, hohes Dispergiervermögen und damit hohe Penetrationsfähigkeit.

Zur Erzielung besonderer Hydrophobier-, Fettungs-, Füll- und Nachgerbeffekten sowie zur Steuerung des Emulgier- bzw. Dispergierverhaltens der erfindungsgemäßen Polymere können bei Bedarf die im Polymer vorhandenen Carbonsäureanhydridgruppen mit Alkoholen und/oder Aminen solvolysiert werden. Dazu wird das Polymerisat vorteilhaft bei Temperaturen von 100 bis 140° C, eventuell unter Druck, mit vorzugsweise 0 bis 90 Mol %, bezogen auf die im Polymerisat vorhandenen Anhydridgruppen, des ausgewählten Alkohols und/oder Amins versetzt. Die Reaktion verläuft ähnlich schnell wie bei den monomeren Carbonsäureanhydriden und ist in der Regel nach 1 bis 4 Stunden beendet. Die noch im Polymerisat vorhandenen restlichen Anhydridgruppen können nun mit Wasser hydrolisiert werden.

Vorteilhaft wird diese Hydrolyse gleichzeitig mit der nachfolgenden Neutralisation des Polymerisats vorgenommen. Dies gilt ebenfalls für Polymerisate, deren Anhydridgruppen nicht mit Alkohol und/oder Aminen solvolysiert wurden.

Die Polymerisate werden vorteilhaft als partiell neutralisierte, wässrige Emulsionen bzw. Dispersionen mit 20 bis 50 % Feststoffgehalt zur Lederbehandlung eingesetzt. Zur Neutralisation der Säuregruppen verwendet man übliche Basen wie Alkalihydroxide, Erdalkalihydroxide, Ammoniak, primäre, sekundäre oder tertiäre Amine, Aminoalkohole wie z.B. Calciumhydroxid, Magnesiumhydroxid, Butylamin, Dibutylamin, Triethylamin, Monoethanolamin, Diethanolamin, Triethanolamin; vorzugsweise verwendet man jedoch Natriumhydroxid und/oder Kaliumhydroxid in Form handelsüblicher 25 bis 50 Gew. %iger Lauge. Der Neutralisationsgrad richtet sich nach der Hydrophilie des Polymerisates. So müssen hydrophil eingestellte Polymerisate weniger weit neutralisiert werden als hydrophob eingestellte. Ebenso ist der Neutralisationsgrad von der Art des Neutralisationsmittels abhängig. So muß bei Verwendung von Triethylamin ein höherer Neutralisationsgrad eingestellt werden als bei Verwendung von Kaliumhydroxid. Dispergierverhalten und Stabilität der fertigen Endprodukte hängen unter anderem von dem Neutralisationsgrad ab. Im allgemeinen ist ein Neutralisationsgrad von 25 bis 75 % der im Polymerisat nach vollständiger Hydrolyse der Anhydridgruppen vorhandenen Säuregruppen, insbesondere 35 bis 60 %, ausreichend.

Die Neutralisation wird bei Temperaturen von 50 bis 100° C durch Verdünnen mit Wasser und Zugabe von Neutralisationsmittel ausgeführt. Höhere Temperaturen können in Druckreaktoren angewendet werden, wobei die Hydrolysebeständigkeit der eventuell vorhandenen Ester- und Amidgruppen berücksichtigt werden muß. Die im Polymerisat vorhandenen Anhydridgruppen hydrolysieren während dieses Vorganges zu Carboxylgruppen und werden so bei der Neutralisation mit erfaßt. Der pH-Wert der gebrauchsfertigen Polymerdispersionen liegt bei 4 bis 10, vorzugsweise bei 5 bis 8.

Die so hergestellten Polymerdispersionen sind ausreichend lagerstabil. Sie können zur Behandlung von Leder für sich allein oder in Kombination mit anderen Fettungs- und Hydrophobiermitteln eingesetzt werden. Vorzugsweise werden die Produkte zur Erzielung eines bestmöglichen Hydrophobiereffektes alleine eingesetzt. Die erfindungsgemäßen Polymerisate besitzen bei wirtschaftlichem Einsatz hervorragend weichmachende, hydrophobierende und füllende Eigenschaften. Sie besitzen eine nachgerbende Wirkung und verbessern die Reißfestigkeit.

Zur Fixierung der Produkte ist im allgemeinen ein Absäuern der Leder auf pH-Werte zwischen 3 und 4 ausreichend. Eine abwasserbelastende Fixierung mit mehrwertigen Metallionen wie z.B. mit Chrom(III)-Ionen kann im Gegensatz zu herkömmlichen Hydrophobiermitteln entfallen. Da die erfindungsgemäßen Polymere keine organischen Lösemittel enthalten und gleichzeitig äußerst geruchsarm sind, sind sie auch aus ökologischer Sicht zu bevorzugen.

Im folgenden werden die erfindungsgemäßen Copolymerisate und deren Dispersionen anhand von Beispielen noch näher erläutert.

### Copolymerisat-Dispersion 1

In einem Glasreaktor mit Rührer und Dosiervorrichtungen werden 200 g Octadecen-1 und 26,8 g 10-Undecensäure vorgelegt und in einem schwachen Stickstoffstrom auf 180° C aufgeheizt. Nach Erreichen der Temperatur werden 68,6 g flüssiges Maleinsäureanhydrid und getrennt 68,4 g Dibutylmaleinat, welches 7,5 g Di-t-Butylperoxid enthält, während 3 Stunden zudosiert. Anschließend wird bei gleicher Temperatur 2 Stunden nachgerührt und auf 100° C abgekühlt. Nach Zugabe von 910,2 g Wasser und 54,5 g Natronlauge (33 %ig) wird eine Stunde bei 80° C gerührt. Man erhält nach dem Abkühlen auf 25° C eine weiße, cremige Dispersion mit ca. 30 Gew. % Trockensubstanz. Das Polymerisat hat eine mittlere Molmasse von 8.495 g/Mol.

Das damit nach Anwendungsbeispiel 1 gefertigte Leder war sehr weich, egal gefärbt und zeigte eine sehr gute dynamische Wasserdichtigkeit.

Die Prüfung auf dem Bally-Penetrometer ließ bei 15 % Stauchung nach 24 Stunden keinen Wasserdurchtritt erkennen. Die Wasseraufnahme betrug dabei 18,9 %.

### Copolymerisat-Dispersion 2

In einem Glasreaktor mit Rührer und Dosiervorrichtungen werden 168 g Hexadecen-1 und 138 g Undecensäure vorgelegt und in einem schwachen Stickstoffstrom auf 180° C aufgeheizt. Nach Erreichen der Temperatur werden 147 g flüssiges Maleinsäureanhydrid und getrennt 9 g Di-t-Butylperoxid während 5 Stunden zudosiert. Nach einer Nachrührzeit von 2 Stunden bei gleicher Temperatur wird auf 120° C abgekühlt und während 30 Minuten mit 142,5 g Cocosfettamin versetzt. Das Polymerisat wird 2 Stunden bei 120° C gerührt, auf 100° C gekühlt und mit 1,401 g Wasser verdünnt. Nach Zugabe von 136,5 g Natronlauge 33 %ig wird 1 Stunde bei 80° C gerührt.

Man erhält eine beige, fließfähige Dispersion mit ca. 30 Gew. % Trockensubstanz. Das Polymerisat hat eine mittlere Molmasse von 6.860 g/Mol.

Das damit nach Anwendungsbeispiel 2 gefertigte Leder war weich und voll. Die Prüfung auf dem Bally-Penetrometer bei 15 % Stauchung ließ nach 8 Stunden keinen Wasserdurchtritt erkennen bei einer Wasseraufnahme von 19,7 %.

### Copolymerisat-Dispersion 3

In einem Glasreaktor mit Rührer und Dosiervorrichtungen werden 511,2 g Undecensäure-C 16/18-alkylester und 55,2 g Undecensäure vorgelegt und in einem schwachen Stickstoffstrom auf 180° C aufgeheizt. Nach Erreichen der Temperatur werden 147 g flüssiges Maleinsäureanhydrid und getrennt 17 g Di-t-Butylperoxid gleichmäßig während 3 Stunden zudosiert. Anschließend wird bei gleicher Temperatur 2 Stunden nachgerührt und auf 100° C abgekühlt. Das Polymerisat wird mit 1.750 g Wasser verdünnt und mit 200 g Natronlauge 33 %ig partiell neutralisiert. Zur vollständigen Hydrolyse der Anhydridgruppen wird bei 80° C 1 Stunde gerührt. Nach dem Abkühlen erhält man eine beige, feinteilige Dispersion mit ca. 30 Gew. % Trockengehalt. Das Polymerisat hat eine mittlere Molmasse von 14.940 g/Mol.

### Anwendungsbeispiel 1

Chromnarbenleder mit einer Falzstärke von 1,8 mm, entsäuert auf einen pH-Wert von 4,8 - 5, wurde in 100 % Flotte mit 1 %, bezogen auf das Falzgewicht, eines handelsüblichen Anilinfarbstoffs gefärbt und mit 16 % der Polymerisat-Dispersion 1 praxisgerecht gelickert. Anschließend wurde mit Ameisensäure auf einen pH-Wert von 3,9 abgesäuert. Das Leder wurde gewaschen, ausgereckt und getrocknet. Das so erhaltene Leder war sehr weich, gleichmäßig gefärbt, festnarbig und gut gefüllt.

Die Prüfung auf dem Bally-Penetrometer ließ bei 15 % Stauchung nach 24 Stunden keinen Wasserdurchtritt erkennen. Die Wasseraufnahme lag bei 18,9 %.

### Anwendungsbeispiel 2

Chromnarbenleder mit einer Falzstärke von 1,8 mm wurde auf einen pH-Wert von 5 entsäuert. 13 %, bezogen auf das Falzgewicht, der Dispersion 3 wurden zusammen mit 1 % eines handelsüblichen Anilinfarbstoffes während 2 Stunden und anschließend 3 % der gleichen Dispersion während 1 Stunde eingewalkt. Die Flottenlänge betrug dabei 150 %.

Nach dem Absäuern auf einen pH-Wert von 3,8 wurde in frischer Flotte mit 2 % eines handelsüblichen Chromgerbstoffs 1 Stunde bei 50° C fixiert. Das Leder wurde gewaschen, ausgereckt und vakuumgetrocknet. Das so erhaltene Leder war voll und sehr weich, gleichmäßig gefärbt und zeigte eine hervorragende dynamische Wasserdichtigkeit.

Die Prüfung auf dem Bally-Penetrometer ließ bei 15 % Stauchung nach 24 Stunden keinen Wasserdurchtritt erkennen. Die Wasseraufnahme lag bei 16,7 %.

## Patentansprüche

1. Copolymerisate, insbesondere für die Behandlung von Leder und Pelzfellen, erhalten durch Copolymerisation einer ersten Komponente (a), ausgewählt aus der Reihe der ethylenisch ungesättigten Dicarbonsäureanhydride, ethylenisch ungesättigter Dicarbonsäureester und ethylenisch ungesättigter Dicarbonsäureamiden oder Gemischen hiervon,
sowie einer Komponente (b) der allgemeinen Formel 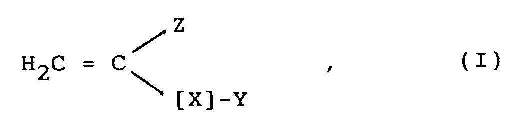 wobei X = (CH₂)ₙ, n ≧ 2 ist und Y eine Carboxylgruppe oder einen OCOR¹-Rest, einen COOR²-Rest oder einen CONR³R⁴-Rest repräsentiert und Z Wasserstoff oder ein niederer Alkylrest ist,
wobei R¹ ein C₁-C₂₀-Alkyl-Rest ist,
wobei R² ein C₁-C₂₀-Alkyl-Rest oder ein Alkoxylierungsprodukt hiervon ist,
wobei R³ und R⁴ Wasserstoff oder einen Alkylrest (C₁-C₂₀) repräsentieren und gegebenenfalls verschieden sind.

2. Copolymerisate nach Anspruch 1, gekennzeichnet durch ein mittleres Molekulargewicht von ca. 800 bis ca. 30 000 g/Mol.

3. Copolymerisate nach Anspruch 1 oder 2, dadurch gekennzeichnet, daß im Copolymerisat zunächst vorhandene Carbonsäureanhydridgruppen in wässriger Umgebung hydrolysiert sind, wobei die entstandenen Carboxylgruppen, zumindest teilweise, mit Basen, vorzugsweise Alkalihydroxiden, neutralisiert sind.

4. Copolymerisate nach einem der Ansprüche 1 bis 3, dadurch gekennzeichnet, daß im Copolymerisat noch vorhandene Carbonsäureanhydridgruppen bis zu einem Anteil von 90 % mit Alkoholen oder primären oder sekundären Aminen oder Gemischen hiervon umgesetzt sind.

5. Copolymerisate nach einem der Ansprüche 1 bis 4, dadurch gekennzeichnet, daß die Polymere bei einer Temperatur von ca. 60° C bis ca. 250° C polymerisiert sind.

6. Copolymerisate nach einem der Ansprüche 1 bis 5, dadurch gekennzeichnet, daß die Komponente (b) ein Undecensäurederivat oder ein Undecenolderivat sowie gegebenenfalls Alkylvinylether mit 8 bis 20 C-Atomen, Carbonsäurevinylester mit 8 bis 20 C-Atomen und 1-Alkene mit 8 bis 30 C-Atomen einzeln oder im Gemisch umfaßt.

7. Verwendung der Copolymerisate nach einem oder mehreren der Ansprüche 1 bis 6 zur Behandlung von Leder und Pelzfellen, insbesondere zur Hydrophobierung sowie zur Erzielung von Fettungs-, Füll- oder Nachgerbeeffekten.

8. Verwendung der Copolymerisate gemäß Anspruch 7, wobei die Copolymerisate als partiell neutralisierte, wässrige Emulsionen oder Dispersionen mit einem Feststoffgehalt von ca. 20 bis ca. 50 Gew. % eingesetzt werden.
